Europäisches Patentamt

European Patent Office

Office européen des brevets

(19)

(11) Veröffentlichungsnummer : **0 208 828**
**B1**

(12)

# EUROPÄISCHE PATENTSCHRIFT

(45) Veröffentlichungstag der Patentschrift :
26.04.89

(51) Int. Cl.⁴ : **B 23 B 15/00**

(21) Anmeldenummer : **86101320.9**

(22) Anmeldetag : **01.02.86**

(54) **Beschickungseinrichtung für Senkrechtdrehmaschinen.**

(30) Priorität : **06.07.85 DE 8519622 U**

(43) Veröffentlichungstag der Anmeldung :
**21.01.87 Patentblatt 87/04**

(45) Bekanntmachung des Hinweises auf die Patenterteilung : **26.04.89 Patentblatt 89/17**

(84) Benannte Vertragsstaaten :
**DE FR IT**

(56) Entgegenhaltungen :
**CH–A– 401 636**
**DE–A– 1 477 208**
**DE–A– 2 822 990**
**FR–A– 2 546 090**

(73) Patentinhaber : **Wilhelm Hegenscheidt Gesellschaft mbH**
**Neusser Strasse 3**
**D-5140 Erkelenz (DE)**

(72) Erfinder : **Wolters, Hermann, Dipl.-Ing.**
**Irisweg 25**
**D-4050 Mönchengladbach 4 (DE)**

(74) Vertreter : **Liermann, Manfred**
**Josef-Schregel-Strasse 19**
**D-5160 Düren (DE)**

## Beschreibung

Die Erfindung betrifft eine Beschickungseinrichtung für Senkrechtdrehmaschinen, mit einem eine Werkstückaufnahmeeinrichtung aufweisenden Be- und Entlademanipulator, mit gradlinig in Richtung auf das Drehzentrum der Senkrechtdrehmaschine verfahrbaren Ladearmen, an welchen die Werkstückaufnahmeeinrichtung angeordnet ist, sowie einem Werkstückmagazin für die Aufnahme mehrerer scheibenförmiger Werkstücke, insbesondere bearbeiteter und/oder unbearbeiteter Eisenbahnräder.

Eine Beschickungseinrichtung der oben beschriebenen Art ist aus der Praxis bekannt. Es handelt sich hierbei um sehr leistungsfähige Einrichtungen, die bei der Herstellung großer Serien Anwendung finden. Es kommen in einer solchen Anlage mehrere Senkrechtdrehmaschinen zum Einsatz, wobei jeder Senkrechtdrehmaschine ein Belademanipulator und ein Entlademanipulator zugeordnet ist. Die Manipulatoren sind so ausgebildet, daß deren Werkstückaufnahmeeinrichtung in geradliniger Bewegung zum Drehzentrum der Drehmaschine verfährt oder von diesem wegfährt, je nachdem, ob ein Werkstück eingelegt oder entnommen werden soll. Das Werkstückmagazin besteht aus einem Linearförderer, der als Förderband oder Taktband ausgebildet ist und im Griffbereich der Manipulatoren an der Vorderfront aller Maschinen vorbei geführt wird. Dieses Taktband fördert zu bearbeitende und bearbeitete Werkstücke. Der Belademanipulator entnimmt von dieser als Magazin dienenden Fördereinrichtung einen Radrohling und legt diesen in die Senkrechtdrehmaschine ein.

Der Entlademanipulator entnimmt aus der Senkrechtdrehmaschine ein teilweise oder fertig bearbeitetes Rad und legt es auf der Fördereinrichtung ab. Die Manipulatoren bewegen hierbei die Werkstückaufnahmeeinrichtungen geradlinig stoßend bzw. ziehend, wobei diese geradlinigen Bewegungen die Schenkel eines Winkels bilden, wobei der Scheitelpunkt des Winkels im Drehzentrum der Senkrechtdrehmaschine liegt.

Die oben beschriebenen Einrichtungen haben sich in der Großserienfertigung bestens bewährt. Sie sind jedoch nicht geeignet, dann wenn es notwendig ist, in häufigem Wechsel kleine Serien unterschiedlicher Eisenbahnräder zu fertigen. Wenn nur aus Kapazitätsgründen eine oder zwei Senkrechtdrehmaschinen beschickt werden sollen, ist die beschriebene Anlage zu aufwendig.

Eine weitere Beschickungseinrichtung ist mit der DE-C-28 22 990 bekannt geworden. Auch eine solche Einrichtung ist als Hochleistungseinrichtung ausgelegt, auch wenn sie steuerungstechnisch und von ihrer Konstruktionsart her durchaus in der Lage ist, auch Einzelmaschinen zu bedienen. Insbesondere das in dieser Druckschrift verwendete Werkstückmagazin erlaubt einen Einsatz auch zur Beschickung von Einzelmaschinen. Der Manipulatoraufwand ist dann jedoch relativ groß.

Eine vergleichbare Einrichtung ist bekannt geworden mit der DE-U-84 35 288. Diese Anlage entspricht im wesentlichen einer Anlage nach der vorgenannten DE-C-28 22 990. Es wird jedoch ein anderer Aufbau des Werkstückmagazins vorgeschlagen.

Beschickungseinrichtungen für Senkrechtdrehmaschinen für die Bearbeitung von Eisenbahnrädern sind immer wieder maßgeschneiderte Einrichtungen, die von Fall zu Fall entworfen und gebaut werden.

Der Erfindung liegt die Aufgabe zugrunde, eine Beschickungseinrichtung der eingangs beschriebenen Art vorzuschlagen, mit der es gelingt, Einzelmaschinen wirtschaftlich zu be- und entladen, wobei die Magazinnachfüllung und -entleerung den Arbeitsprozeß nicht unterbrechen soll und wobei die gesamte Anlage mit geringem Konstruktionsaufwand zusammenstellbar sein soll.

Erfindungsgemäß ist diese Aufgabe bei einer Einrichtung der eingangs beschriebenen Art dadurch gelöst, daß das Werstückmagazin zwei Einzelmagazine, je eines für den Be- und Entlademanipulator, enthält, welch jedes mehrere beweglich angeordnete Teilmagazine aufweist, von denen jedes Teilmagazin einzeln mit einer Mittenebene oder mit jedem Werkstück wenigstens angenähert auf die Mittenebene des Verfahrweges für die Werkstückaufnahmeeinrichtung eines zugeordneten Be- und Entlademanipulators positionierbar ist.

Auf diese Art und Weise gelingt es, ausschließlich bereits bekannte Komponenten in geschickter Weise so zusammenzustellen, daß sie — obwohl ursprünglich nicht für ein Zusammenwirken gedacht — aufgrund ihrer geschickten gegenseitigen Anordnung gleichwohl in Wirkverbindung miteinander treten können. Es gelingt somit, die Vorteile der bekannten Einzelkomponenten jeweils für sich miteinander zu verbinden und auf diese Art und Weise mit einfachsten Mitteln und aus bekannten Bausteinen eine völlig neue Anlage zusammenzustellen, mit der es gelingt, Senkrechtdrehmaschinen auch in der Kleinserienfertigung von Eisenbahnrädern wirtschaftlich zu beschicken.

Eine Ausgestaltung der Erfindung wird darin gesehen, daß die Teilmagazine jedes Einzelmagazines um einen gemeinsamen Mittelpunkt angeordnet sind, wobei diese Teilmagazine um eine durch den gemeinsamen Mittelpunkt vertikal verlaufende Achse in vorgegebene Winkelpositionen drehbar ausgebildet sind. Hierdurch wird mit einfachen Mitteln erreicht, daß immer Teilmagazine für die Beladung oder Entladung zugänglich sind, während andere Teilmagazine vom Manipulator noch entleert bzw. gefüllt werden. Ein solches Magazin ist besonders vorteilhaft in Kombination mit den hier beschriebenen Be- und Entlademanipulatoren, bei denen die Werkstückaufnahmeeinrichtung eine geradlinige Bewegung zum Drehzentrum oder von diesem weg, durchführen. Die Entnahme des Werkstückes und dessen Positionierung für eine Aufnahme durch die Senkrechtdrehmaschine wird besonders einfach.

In weiterer Ausgestaltung der Erfindung ist vorgesehen, daß die Teilmagazine sternförmig in radialer Ausrichtung zum gemeinsamen Mittelpunkt des zugeordneten Einzelmagazines angeordnet sind, wobei jedes Teilmagazin so in eine Winkellage eindrehbar und dort positionierbar ist, daß die Verlängerung seiner Mittenebene eine Verbindung zwischen dem Drehzentrum und dem gemeinsamen Mittelpunkt bildet. Dies ist eine günstige Variante, die es ermöglicht, das Teilmagazin auf einfache Weise mittels beispielsweise eines Gabelstaplers zu füllen. Hierzu ist es lediglich erforderlich, daß die in das Magazin einzubringenden Eisenbahnräder beispielsweise auf einem vom Gabelstabler getragenen Dorn aufgereiht sind. In dieser Lage — der Dorn steht hierbei nahezu waagerecht werden die Eisenbahnräder in das Teilmagazin gefahren und dort abgelegt. Der Dorn wird entnommen und die Eisenbahnräder stehen in gegenseitiger Anlage leicht zur Vertikalen geneigt im Magazin und können dort von der Werkstückaufnahmeeinrichtung Stück für Stück entnommen werden.

Eine alternative Weiterbildung der Erfindung sieht vor, daß jedes Einzelmagazin mehrere nebeneinander angeordnete Teilmagazine enthält. Ist eine Schwenkung der Magazine, aus welchem Grund auch immer, nicht möglich, oder nicht erwünscht, so stellt sich die Nebeneinanderanordnung der Teilmagazine als gleichwertige Lösung dar. Auch eine solche Anordnung der Teilmagazine ist im Stand der Technik bereits kannt, entfaltet jedoch in der hier beschriebenen besonderen Kombination mit den zugeordneten Manipulatoren besondere Vorteile bei der Beschickung von Einzelmaschinen in der Kleinserienfertigung.

Schließlich ist nach der Erfindung noch vorgeschlagen, daß die Teilmagazine mit ihrer Stapelrichtung parallel zueinander und zu einer Verfahrebene des Ladearmes des zugeordneten Manipulators ausgerichtet sind, wobei alle Teilmagazine rechtwinklig zu der genannten Ausrichtung verschiebbar geführt sind. Hierdurch wird eine besonders einfache Be- und Entladung ermöglicht, und es stellt die seitliche Verschiebbarkeit eine günstige Möglichkeit dar, die Teilmagazine einerseits in Wirkverbindung zum Manipulator zu bringen und andererseits ein jeweiliges Teilmagazin frei zugänglich für eine Be- bzw. Entladung von außen zu machen.

Die Erfindung soll anhand der beigefügten Zeichnungen näher erläutert werden.

Es zeigen :

Figur 1 : Beschickungseinrichtung und Drehmaschine in Draufsicht

Figur 1a : Einrichtung wie Figur 1, jedoch mit nur einem Manipulator für die Be- und Entladung

Figur 2 : Schnitt entlang der Linie I-I nach Figur I

Figur 3 : Variante zu Figur II mit Steuereinrichtung

Figur 4 : Darstellung wie Figur 1, jedoch mit sternförmigen Einzelmagazinen

Figur 5 : Ansicht in Richtung des Pfeils A nach Figur 4

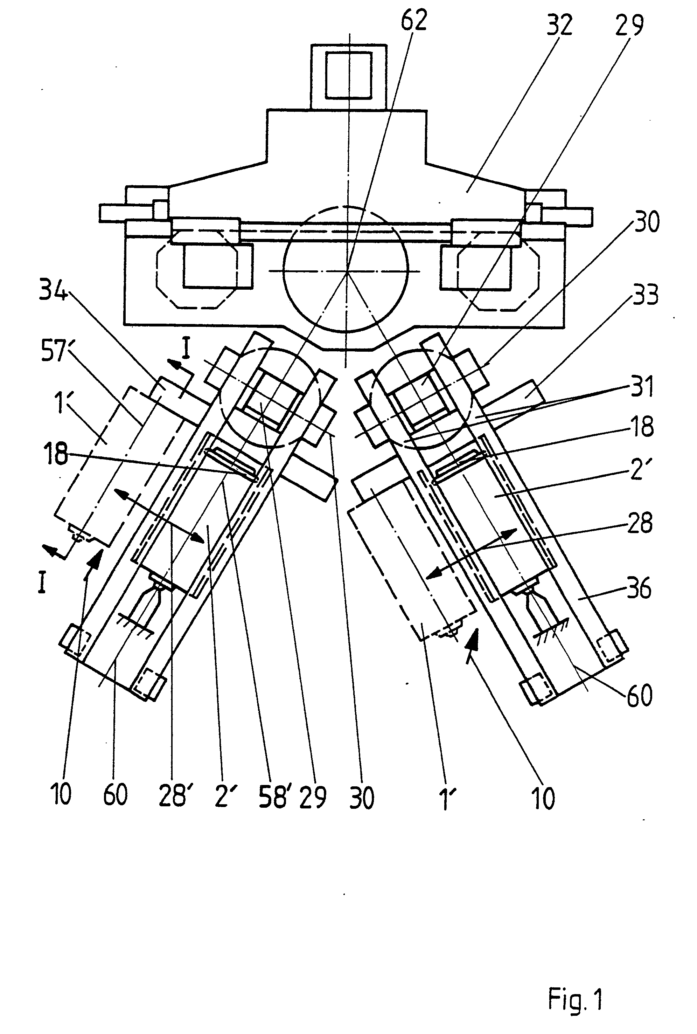

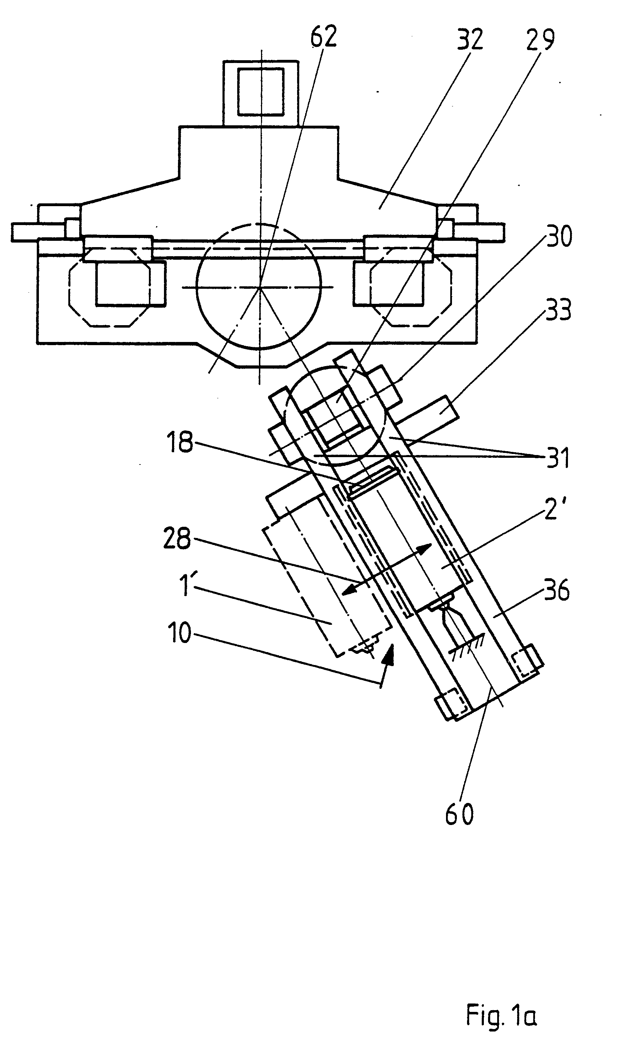

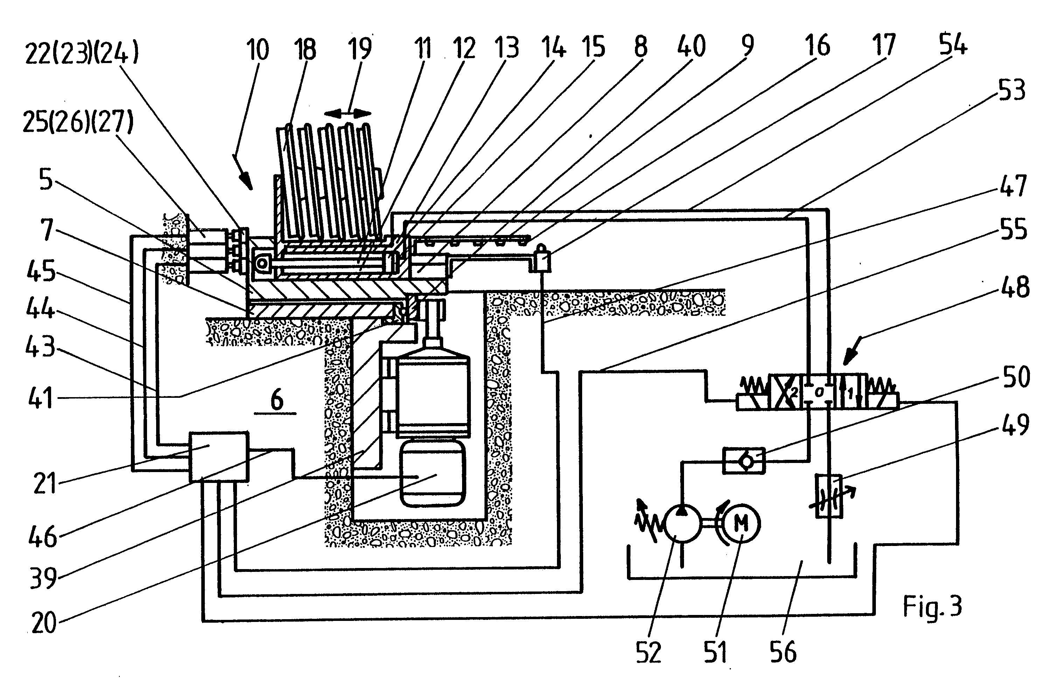

Im Ausführungsbeispiel nach Figur 1 soll für die Kleinserienfertigung eine Senkrechtdrehmaschine 32 mit Eisenbahnrädern 18 beschickt und von diesen auch wieder entladen werden. Auf der Frontseite der Senkrechtdrehmaschine 32 ist hierfür ein Belademanipulator 33 und ein Entlademanipulator 34 vorgesehen. Der Manipulatoraufbau dieser Manipulatoren an sich ist im Stand der Technik bereits bekannt. Im wesentlichen tragen hierbei Träger 63 Schienen 36, die einen an den Schienen verfahrbar geführten Ladearm 31 führen, derart, daß der Ladearm 31 sich geradlinig auf das Drehzentrum 62 zu- und von diesem wegbewegen kann. Der Ladearm 31 jedes Manipulators 33 bzw. 34 trägt eine Werkstückaufnahmeeinrichtung 29, die geeignet ist, ein Eisenbahnrad 18 aus einem Einzelmagazin 10 bzw. 10' zu entnehmen. Im Ausführungsbeispiel nach Figur 1 sind unterhalb der Schienen 36 jeweils Einzelmagazine 10 vorgesehen, deren Teilmagazine 1' bzw. 2' in Richtung des Pfeils 28 bzw. 28' verschiebbar sind. Hierdurch gelingt es immer, ein Teilmagazin 1' bzw. 2' unterhalb der Schiene 36 zu positionieren, wodurch die Eisenbahnräder 18 für die Werkstückaufnahmeeinrichtung 29 erreichbar werden. Das jeweils andere Magazin ist hierdurch von außen erreichbar und kann mit neuen Werkstücken beladen werden oder es können die fertigen Werkstücke entladen werden, ohne daß hierdurch der Be- und Entladevorgang zum Be- und Entladen der Senkrechtdrehmaschine 32 unterbrochen werden müßte. Die richtige Magazinposition kann hierbei über Nockenschalter, wie zu Figur 3 noch beschrieben wird, festgestellt werden.

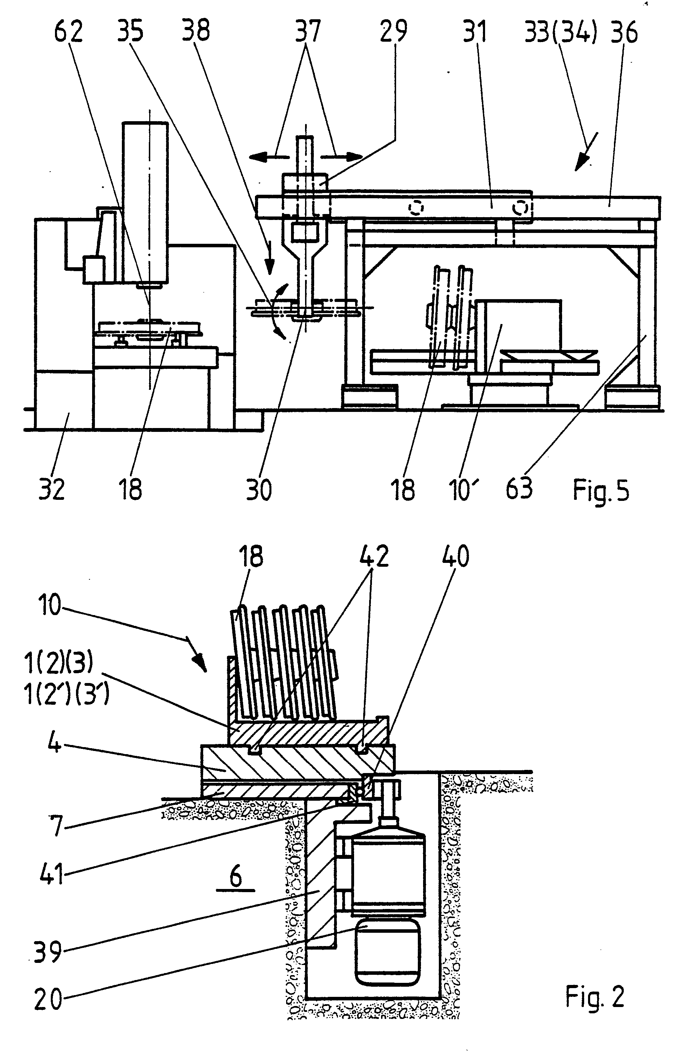

Die Einrichtung nach Figur 1 ist nicht auf die Verwendung von zwei Teilmagazinen 1' bzw. 2' je Manipulator 33 und 34 beschränkt. Wenn die Platzverhältnisse es zulassen, ist es durchaus möglich, beispielsweise drei solcher Teilmagazine zu verwenden. Eine solche Ausführungsform mit drei Teilmagazinen wird zu Figur 2 und Figur 3 noch beschrieben werden.

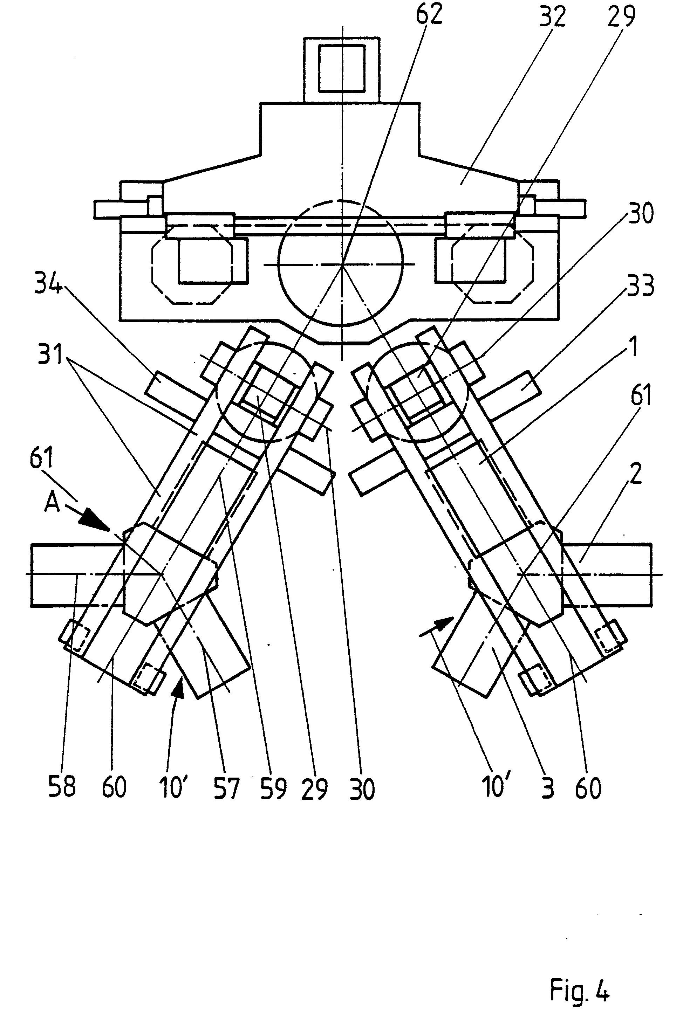

Eine Variation der Einrichtung nach Figur 1 zeigt Figur 4. Anstelle der seitlich verschiebbaren Einzelmagazine 10 sind nach Figur 4 Einzelmagazine 10' eingesetzt, bei denen die Teilmagazine 1, 2 und 3 um einen gemeinsamen Mittelpunkt 61 drehbar angeordnet sind. Wie der Figur 5 entnommen werden kann, sind hierbei die Teilmagazine 1, 2 und 3 so ausgerichtet, daß sie die Eisenbahnräder 18 mit im wesentlichen horizontaler Achse in gegenseitiger Anlage aufnehmen. Es wäre jedoch auch denkbar, beispielsweise die Teilmagazine 1, 2 und 3 so anzuordnen, daß die Eisenbahnräder 18 selbst in horizontaler Lage vertikal übereinander gestapelt wären. Sie könnten in dieser Stapelung auch auf einem vertikal verlaufenden Dorn angeordnet sein. Die Beweglichkeit des Manipulators erlaubt auch in diesem Fall die Entnahme der Werkstücke. Ebenfalls ist es möglich, die Teilmagazine so verschieblich zu machen, daß dem Manipulator in einer festen Position der Werkstückaufnahmeeinrichtung jeweils ein Werkstück entgegengebracht wird. Es kann jedoch auch, wie in den Ausführungsbeispielen, der Manipulator von Werkstück zu Werkstück fahren und sich dabei jeweils ein neues Werkstück selbständig suchen.

Bei einer Einrichtung nach Figur 4 und Figur 5 liegt der gemeinsame Mittelpunkt 61 innerhalb der Mittenebene 60. Die Teilmagazine 1, 2 und 3 können nun in solche Winkelpositionen geschwenkt werden, daß ihre Mittenebenen 57, 58 oder 59 wahlweise in die Mittenebene 60 eingeschwenkt ist. Es ist dann das jeweils so eingeschwenkte Teilmagazin in der richtigen Entnahmeposition oder Beladeposition für den Manipulator.

Die Art und Weise wie ein solches Einzelmagazin 10' mit den Teilmagazinen 1, 2 und 3 ausgebildet und bewegbar sein kann, kann der bereits zitierten DE-C-28 22 990 entnommen werden. Alle dort aufgeführten konstruktiven Einzelheiten können auch hier zweckmäßig verwirklicht werden. Die besondere Anordnung solcher Einzelmagazine relativ zu und in Kombination mit den speziellen Manipulatoren ermöglicht es, die eingangs gestellt Aufgabe überraschend einfach und mit geringem konstruktivem Aufwand zu verwirklichen.

Bei einem Ausführungsbeispiel nach Figur 4 und 5 ist jeweils zum Manipulator 33 bzw. 34 ein Teilmagazin 1 in die beschriebene Winkelposition gedreht worden, die es dem Manipulator erlaubt, die Eisenbahnräder 18 zu entnehmen. Hierzu fährt der Ladearm des Manipulators 33 zunächst in Richtung des Pfeils 37 rückwärts und in Richtung des Pfeils 38 abwärts, bis die Werkstückaufnahmeeinrichtung 29 mit im Stand der Technik bekannten Einrichtungen die richtige Position für die Übernahme eines Eisenbahnrades 18 festgestellt hat. In dieser Stellung bleibt der Ladearm 31 stehen und es wird ein Eisenbahnrad 18 von der Werkstückaufnahmeeinrichtung 29 übernommen, sodann fährt der Ladearm 31 in Richtung des Pfeils 37 vorwärts und gleichzeitig kann die Werkstückaufnahmeeinrichtung 29 umgekehrt zum Pfeil 38 aufwärts fahren und es wird in der Werkstückaufnahmeeinrichtung 39 das Werkstück 18 um die horizontale Achse 30 in Richtung des Pfeils 35 geschwenkt, so daß das Eisenbahnrad 18 in die horizontale Lage kommt und dort gehalten wird. Es wird nun richtig über das Drehzentrum 62 gefahren und dort durch eine Bewegung der Werkstückaufnahmeeinrichtung 29 in Richtung des Pfeils 38 auf das nicht näher bezeichnete Spannfutter abgelegt, worauf der Manipulator sich aus dem Arbeitsbereich der Senkrechtdrehmaschine 32 entfernt.

Der Manipulator 34 arbeitet in umgekehrter Reihenfolge bei der Entnahme des bearbeiteten Eisenbahnrades 18 aus der Senkrechtdrehmaschine 32, so daß hier eine detaillierte Beschreibung nicht erforderlich ist.

Die Teilmagazine 2 und 3 stehen jeweils für eine Nachladung oder für eine Entnahme zur Verfügung und sind von außen frei zugänglich. Der Arbeitsbetrieb muß nicht unterbrochen werden. Es ist somit gelungen, aus an sich bekannten Komponenten ein Magazin mit einer Be- und Entladeeinrichtung zusammenzustellen, deren gegenseitige Relation zueinander eine wirtschaftliche Beschickung einer einzelnen Senkrechtdrehmaschine 32 in der kleinen Serienfertigung ermöglicht.

Die Arbeitsweise der Manipulatoren 33 und 34 ist auch im Ausführungsbeispiel nach den Figuren 1, 2 und 3 so wie bereits beschrieben. Lediglich die Einzelmagazine sind anders aufgebaut und anders bewegbar.

In Figur 2 ist ein Einzelmagazin 10 dargestellt, bei welchem auf einer Tragplatte 4 mehrere Teilmagazine 1', 2' und 3' parallel nebeneinander angeordnet sind. Um zu verdeutlichen, daß die Einrichtung nicht auf zwei Teilmagazine, wie im Ausführungsbeispiel nach Figur 1, beschränkt ist, soll hier von drei solcher Teilmagazine ausgegangen werden.

Die Teilmagazine 1', 2', 3' sind über Bolzen 42 mit der Tragplatte 4 lösbar verbunden. Die Tragplatte 4 weist auf ihrer Unterseite eine in horizontaler Richtung ausgerichtete und an der Tragplatte befestigte Zahnstange 40 auf, die mit einem nicht näher bezeichneten Ritzel eines Getriebemotors 20 zusammenarbeitet, wobei der Getriebemotor 20 über eine Motortragplatte 39 in einer ebenfalls nicht näher bezeichneten Ausnehmung des Fundamentes 6 befestigt ist. Die den Zähnen der Zahnstange 40 abgewandte Seite dieser Zahnstange stützt sich über nicht näher bezeichnete Wälzelemente an einer entsprechend ausgerichteten Wälzlagerführung 41 ab, die sich ihrerseits an einer Stirnseite einer Fundamentplatte 7 abstützt, wobei die Fundamentplatte 7 am Fundament 6 befestigt ist. Die weitere Sicherung und Abstützung der Tragplatte 4 ist in den Zeichnungen nicht näher dargestellt und kann in beliebiger Weise erfolgen. So ist es beispielsweise möglich, auf der Rückseite der Tragplatte 4 eine weitere Wälzführung vorzusehen, die einerseits die auf das Fundament 6 drückenden Kräfte und andererseits die parallel zur Oberfläche des Fundamentes 6 gerichteten Kräfte aufnimmt. Es ist aber auch möglich, beispielsweise zwischen der Tragplatte 4 und der Fundamentplatte 7 eine hydrostatische Lagerung zur Aufnahme der gegen das Fundament gerichteten Kräfte vorzusehen und die parallel zur Oberfläche des Fundamentes gerichteten Kräfte durch andere geeignete Einrichtungen aufzufangen. Eine geeignete konstruktive Ausgestaltung kann dem Fachmann überlassen bleiben. Im Ausführungsbeispiel ist das dargestellte Einzelmagazin mit unbearbeiteten Werkstücken 18, vorzugsweise mit Eisenbahnrädern beladen. Die Werstücke 18 sind scheibenförmig, und stehen im wesentlichen senkrecht in gegenseitiger Anlage. Die Werstücke 18 werden der Werkstückaufnahmeeinrichtung 29 angeboten, welche in bereits beschriebener Weise die Werkstücke entnimmt.

Ist ein Teilmagazin leer oder gefüllt — je nachdem ob es sich um den Belade- oder Entlademanipulator handelt- so wird der Getriebemotor 20 betätigt, der die Tragplatte 4 und damit die auf dieser angeordneten Teilmagazine 1, 2 und 3 solange verschiebt, bis dem jeweiligen Manipulator wieder ein leeres, bzw. gefülltes Teilmagazin 1, 2 und 3 zugeordnet ist. Das Erreichen dieser Position wird von den in Figur 3 dargestellten Nockenschaltern 25, 26 bzw. 27 festgestellt, von denen der gewünschte Nockenschalter, von der Anlagensteuerung 21 über die Leitungen 43, 44 und 45 angesteuert wird, wobei die Anlagensteuerung 21 gleichzeitig über die Leitung 46 den Getriebemotor 20 in richtiger Drehrichtung einschaltet. Der dem solcherart von der Anlagensteuerung 21 aktivierten Nockenschalter 25, 26 oder 27 zugeordnete Nocken 22, 23 oder 24 befährt bei Erreichen der gewünschen Position den von der Anlagensteuerung 21 aktivierten Nockenschalter, wodurch der Getriebemotor 20 mit geeigneter Verzögerung stillgesetzt wird. Es ist daher der Getriebemotor 20 vorzugsweise als Getriebebremsmotor ausgebildet. Es sind hier jedoch auch andere Arten der Positionsfixierung — auch als Indexierung ausgebildet — möglich.

Auch die Anordnung von drei Teilmagazinen 1, 2, 3 auf der Tragplatte 4 ist keineswegs zwingend. Es können beispielsweise ebensogut vier solcher Teilmagazine in der beschriebenen Anordnung dort vorgesehen sein, ebenso wie die zweier-Anordnung nach Figur 1. Bei einer vierer-Anordnung könnten beispielsweise zwei Teilmagazine mit Rohlingen gefüllt werden und die beiden anderen Teilmagazine leer gelassen werden für die Aufnahme fertiger Werkstücke. Auf diese Art und Weise stehen der Senkrechtdrehmaschine eine große Anzahl von zu bearbeitenden Werkstücken zur Verfügung, die — auf engstem Raum untergebracht — je nach Arbeitsumfang sogar die Arbeitszeit einer gesamten Schicht in Anspruch nehmen können. Die Maschine kann daher dann den gesamten Arbeitstag ohne zwischenzeitliche Be- oder Entladung der Magazine betrieben werden, da ja auch die entsprechenden Ablageplätze zur Verfügung stehen.

Eine vereinfachte Variation zeigt Figur la. Wenn bei kleinen Stückzahlen die zur Verfügung stehende Zeit für die Beschickung größer wird, ist es sogar möglich bei einer solchen Magazinanordnung als Be- und Entlademanipulator nur einen einzigen Manipulator der dargestellten und beschriebenen Bauart zu verwenden, der beide Arbeiten ausführt und den richtigen Werkstückzugriff und die richtige Werkstückablagefläche durch entsprechende Verschiebung oder Verdrehung des Einzelmagazines erreicht (siehe Figur 1a). Einzelmagazine für die Be- und Entladung können dann baugleich sein mit entsprechenden Teilmagazinen. Auch in einer solchen Anordnung bleibt für die Nachfüllung oder Entleerung der Magazine während des Arbeitsablaufes genügend Zeit. Natürlich ist die Variation nicht nur mit verschiebbaren sondern auch mit drehbaren Magazinen anwendbar.

Während die Einzelmagazine nach Figur 2 lediglich rechtwinklig zu ihrer Stapelrichtung in horizontaler Richtung verfahrbar sind, sollen die Einzelmagazine 1, 2, 3 bei einer Ausführungsform nach Figur 3 zusätzlich noch in Richtung des Pfeils 19 verfahrbar sein. Ein Magazin dieser Art wird nachfolgend näher erläutert.

Die Grundfunktion dieses Magazines nach Figur 3 hinsichtlich der von dem Getriebemotor 20 bewirkten Verschiebebewegung ist so, wie bereits beschrieben. Bei einem Magazin nach Figur 3 ist jedoch die Tragplatte 4 ausgewechselt gegen eine Tragplatte 5, welche parallel zueinander angeordnete Führungen 8 aufweist, zur verschiebbaren Aufnahme der ebenfalls entsprechend veränderten Einzelmagazine 1, 2 und 3. Diese Einzelmagazine 1, 2 und 3, welche in den Führungen 8 gehalten und verschiebbar geführt sind, weisen eine Antriebseinrichtung in Form einer mit einem Kolben 14 verbundenen Kolbenstange 11 auf, mit deren Hilfe die Einzelmagazine 1, 2 und 3 entlang der Führungen 8 in Richtung des Pfeils 19 verschoben werden können. Die Größe des Verschiebeweges wird bestimmt von Nocken 16, welche auf einer Nockenleiste 9 angeordnet sind in einem Abstand zueinander, der dem gewünschten Verschiebeweg entspricht, wobei die Nocken 16 von der Anlagensteuerung 21 mit Hilfe des Nockenschalters 17 angesteuert werden können, wobei der Nockenschalter 17 über die Leitung 47 mit der Anlagensteuerung 21 verbunden ist. Die Anlagensteuerung 21 bewirkt dann über die Leitung 55 eine entsprechende Schaltung des Ventils 48. Ein Ventil 48 kann verwendet werden unter der Voraussetzung, daß die zu betätigende Antriebseinrichtung eine Kolben-Zylinder-Einheit ist. Wird also von der Anlagensteuerung 21 eine Verschiebung eines Einzelmagazins 1, 2 oder 3 in Richtung des Pfeils 19 veranlaßt, so wird hierzu das Ventil 48 in die Schaltstellung 1 gefahren wodurch das von der selbstregelnden Pumpe 52 gelieferte Drucköl durch das Rückschlagventil 50 über die Leitung 53 in den Zylinderraum 15 einströmt. Da Kolben 14 und Kolbenstange 11 dieses Zylinders 13 mit der Tragplatte 5 verbunden sind, verschiebt sich hierdurch das betreffende Einzelmagazin 1, 2 oder 3, solange, bis der von der Anlagensteuerung 21 angesteuerte Nocken 16 den Nockenschalter 17 betätigt und hierdurch das Ventil 48 von der Anlagensteuerung 21 veranlaßt in die Schaltstellung 0 zurückgeschaltet wird. Das aus dem Zylinderraum 12 verdrängte Öl fließt hierbei über die Leitung 54 über das regelbare Drosselventil 49, mit welchem die Verfahrgeschwindigkeit eingestellt werden kann, zurück in den Tank 56. Soll die Bewegungsrichtung der Einzelmagazine umgekehrt sein, so ist hierzu lediglich das Ventil 48 in die Schaltstellung 2 zu schalten. Der Elektromotor 51 sorgt hierbei für den nötigen Antrieb der selbstregelnden Pumpe 52.

Liste der verwendeten Bezugszeichen

    1 Teilmagazin
    1' Teilmagazin
    2 Teilmagazin
    2' Teilmagazin

3 Teilmagazin
4 Tragplatte
5 Tragplatte
6 Fundamente
7 Fundamentplatte
8 Führungen
9 Nockenleiste
10 Einzelmagazin
10' Einzelmagazin
11 Kolbenstange
12 Zylinderraum
13 Zylindergehäuse
14 Kolben
15 Zylinderinnenraum
16 Nocken
17 Nockenschalter
18 Eisenbahnrad
19 Pfeil
20 Getriebemotor
21 Anlagensteuerung
22 Nocken
23 Nocken
24 Nocken
25 Nocken
26 Nockenschalter
27 Nockenschalter
28 Pfeil
28' Pfeil
29 Werkstückaufnahmeeinrichtung
30 horizontale Achse
31 Ladearm
32 Senkrechtdrehmaschine
33 Belademanipulator
34 Entlademanipulator
35 Pfeil
36 Schiene
37 Pfeil
38 Pfeil
39 Tragplatte Motor
40 Zahnstange
41 Wälzlagerführung
42 Bolzen
43 Leitung
44 Leitung
45 Leitung
46 Leitung
47 Leitung
48 Ventil
49 regelbares Drosselventil
50 Rückschlagventil
51 Motor
52 selbstregelnde Pumpe
53 Leitung
54 Leitung
55 Leitung
56 Tank
57 Mittenebene
57' Mitenebene
58 Mittenebene
58' Mittenebene
59 Mittenebene
60 Mittenebene
61 gemeinsamer Mittelpunkt
62 Drehzentrum
63 Träger

**Patentansprüche**

1. Beschickungseinrichtung für Senkrechtdrehmaschinen mit einem eine Werkstückaufnahmeeinrichtung aufweisen Be- und Entlademanipulator (33, 34), mit gradlinig in Richtung auf das Drehzentrum (62) der Senkrechtdrehmaschine (32) verfahrbaren Ladearmen (31), an welchem die Werkstückaufnahmeeinrichtung (29) angeordnet ist, sowie einem Werkstückmagazin für die Aufnahme mehrerer scheibenförmiger Werkstücke, insbesondere bearbeiteter und/oder unbearbeiteter Eisenbahnräder (18), dadurch gekennzeichnet, daß das Werkstückmagazin zwei Einzelmagazine (10, 10'), je eines für Be- und Entladung, enthält, welch jedes mehrere beweglich angeordnete Teilmagazine (1, 2, 3, 1', 2') aufweist, von denen jedes Teilmagazin (1, 2, 3, 1', 2') einzeln mit einer Mittenebene (57-59, 57', 58') oder mit jedem Werkstück (18) wenigstens angenähert auf die Mittenebene (60) des Verfahrweges für die Werkstückaufnahmeeinrichtung (29) eines zugeordneten Be- und Entlademanipulators (33, 34) positionierbar ist.

2. Einrichtung nach Anspruch 1, dadurch gekennzeichnet, daß die Teilmagazine (1, 2, 3) jedes Einzelmagazines (10) um einen gemeinsamen Mittelpunkt (61) angeordnet sind, wobei diese Teilmagazine (1, 2, 3) um eine durch den gemeinsamen Mittelpunkt (61) vertikal verlaufende Achse in vorgegebene Winkelpositionen drehbar ausgebildet sind.

3. Einrichtung nach Anspruch 2, dadurch gekennzeichnet, daß die Teilmagazine (1, 2, 3) sternförmig in radialer Ausrichtung zum gemeinsamen Mittelpunkt (61) des zugeordneten Einzelmagazins (10) angeordnet sind, wobei jedes Teilmagazin (1, 2, 3) so in eine Winkellage eindrehbar und dort positionierbar ist, daß die Verlängerung seiner Mittenebene (58 ; 57 ; 59) eine Verbindung zwischen dem Drehzentrum (62) und dem gemeinsamen Mittelpunkt (61) bildet.

4. Einrichtung nach Anspruch 1, dadurch gekennzeichnet, daß jedes Einzelmagazin (10') mehrere nebeneinander angeordnete Teilmagazine (1', 2') enthält.

5. Einrichtung nach Anspruch 4, dadurch gekennzeichnet, daß die Teilmagazine (1', 2') mit ihrer Stapelrichtung parallel zueinander und zu einer Verfahrebene (60) des Ladearmes (31) des zugeordneten Manipulators (33, 34) ausgerichtet sind, wobei alle Teilmagazine (1', 2') rechtwinklig zu der genannten Ausrichtung verschiebbar geführt sind.

**Claims**

1. Loading apparatus for a vertical turning machine with a loading and unloading manipulator (33, 34) provided with a supporting fixture for the workpiece, said manipulator having loading arms (31) movable in a straight line in the direction of the centre of rotation (62) of the vertical turning machine (32) on which the supporting fixture for the workpiece (29) is arranged as well as a workpiece magazine for taking several disc-shaped workpieces, especially machined and/or non-machined railway wheels (18), characterized in that the workpiece magazine contains two single magazines (10, 10') one each for loading and unloading, each of which has several movable partial magazines (1, 2, 3, 1', 2'), each partial magazine (1, 2, 3, 1', 2') being individually positionable to a middle line (57-59, 57', 58') or with each workpiece (18) at least approaching the middle line (60) of the path for the support fixture for the workpiece (29) of an associated loading and unloading manipulator (33, 34).

2. Apparatus according to claim 1 characterized in that the partial magazines (1, 2, 3) are arranged round a common centre point (61) of each single magazine (10), whereby theses partial magazines (1, 2, 3) are arranged in given angular positions rotably round an axis running vertically through the common centre point (61).

3. Apparatus according to claim 2 characterized in that the partial magazines (1, 2, 3) are arranged radially to the common centre point (61) of the related single magazine (10), whereby each partial magazine (1, 2, 3) is rotatable and positionable in an angular position so that the extension of it's middle line (58 ; 57 ; 59) forms a connection between the centre of rotation (62) and the common centre point (61).

4. Apparatus according to claim 1 characterized in that each single magazine (10') contains several partial magazines (1', 2') arranged next to each other.

5. Apparatus according to claim 4, characterized in that the partial magazines (1', 2') are aligned with their loading direction parallel to each other and to a driving line (60) of the loading arm (31) of the related manipulator (33, 34), whereby all partial magazines (1', 2') are movable at right angles to the said alignment.

**Revendications**

1. Dispositif pour charger un tour vertical, comportant un manipulateur de chargement et de déchargement (33, 34) muni d'un dispositif de réception de pièces à usiner, des bras de chargement (31) déplaçables en ligne droite dans la direction du centre de rotation (62) du tour vertical (32) et sur lesquels est monté le dispositif de réception de pièces à usiner (29), ainsi qu'un magasin de pièces à usiner destiné à recevoir plusieurs pièces à usiner en forme de disques, notamment des roues (18) de véhicules ferroviaires usinées et/ou non usinées, caractérisé en ce que le magasin de pièces à usiner contient deux magasins individuels (10, 10'), l'un pour le chargement et l'autre pour le déchargement, dont chacun comporte plusieurs magasins élémentaires mobiles (1, 2, 3, 1', 2'), chaque magasin élémentaire (1, 2, 3, 1', 2') pouvant être positionné séparément, par un plan médian (57-59, 57', 58') ou par chaque pièce à usiner (18), au moins approximativement dans le plan médian (60) de la voie de déplacement du dispositif de réception de pièces à usiner (29) d'un manipulateur de chargement et de déchargement associé (33, 34).

2. Dispositif selon la revendication 1, caractérisé en ce que les magasins élémentaires (1, 2, 3) de chaque magasin individuel (10) sont disposés autour d'un point central commun (61), ces magasins élémentaires (1, 2, 3) étant conçus de façon à pouvoir tourner autour d'un axe vertical passant par le point central commun (61) pour venir dans des positions angulaires prédéterminées.

3. Dispositif selon la revendication 2, caractérisé en ce que les magasins élémentaires (1, 2, 3) sont disposés en étoile, selon une orientation radiale par rapport au point central commun (61) du magasin individuel correspondant (10), chaque magasin élémentaire (1, 2, 3) pouvant être placé par rotation, et donc positionné, dans une position angulaire telle que le prolongement de son plan médian (58 ; 57 ; 59) réalise une liaison entre le centre de rotation (62) et le point central commun (61).

4. Dispositif selon la revendication 1, caractérisé en ce que chaque magasin individuel (10') contient plusieurs magasins élémentaires (1', 2') disposés côte à côte.

5. Dispositif selon la revendication 4, caractérisé en ce que les magasins élémentaires (1', 2'), dans leur direction d'empilement, sont orientés parallèlement les uns aux autres et à un plan de déplacement (60) du bras de chargement (31) du manipulateur associé (33, 34), tous les magasins élémentaires (1', 2') étant guidés par coulissement perpendiculairement à l'orientation précitée.

Fig. 1

Fig. 1a

Fig. 5

Fig. 2

3

22(23)(24)  25(26)(27)  5  7  45  44  43  41  21  46  39  20

10  18  19  11  12  13  14  15  8  40  9  16  17  54  53  47  55  48  50  49

6

52  51  56

Fig. 3

EP 0 208 828 B1

Fig. 4